# EUROPEAN PATENT SPECIFICATION

(11) **EP 3 195 397 B1**
(45) Date of publication and mention of the grant of the patent: **18.04.2018**
(21) Application number: 15760502.3
(22) Date of filing: 28.08.2015
(51) Int. Cl.: H01M 8/1011, H01M 8/1041, H01M 8/04082, H01M 8/16, H01M 8/1018

(54) **AN ELECTROLYTE MEMBRANE FOR USE IN AN ELECTROCHEMICAL CELL**
ELEKTROLYTMEMBRAN FÜR ELEKTROCHEMISCHE ZELLE
MEMBRANE D'ÉLECTROLYTE DESTINÉE À ÊTRE UTILISÉE DANS UNE CELLULE ÉLECTROCHIMIQUE

(30) Priority: 28.08.2014 FI 20145745
(43) Date of publication of application: 26.07.2017
(73) Proprietor: Kemira OYJ, 00180 Helsinki (FI)
(72) Inventor: KALLIO, Tanja, FI-00076 Aalto (FI); HALTTUNEN, Sakari, FI-02330 Espoo (FI); RUOTSALAINEN, Jussi, FI-02760 Espoo (FI); HAVERINEN-NIELSEN, Torsten, FI-02200 Espoo (FI)
(74) Representative: Berggren Oy, Helsinki & Oulu
(86) International application number: PCT/FI2015/050559
(87) International publication number: WO 2016/030582

(56) References cited:
- WO-A1-2013/116950
- US-A1- 2004 241 520
- US-B1- 8 735 013

## Description

### Field

The present disclosure relates to an electrolyte membrane suitable for use in an electrochemical cell. In addition, a method for manufacturing the membrane and use of the electrochemical cell comprising said membrane are disclosed.

### Background

The production, storage and distribution of energy are among the main concerns of modern society and industry. Development of solid polymer membrane electrolytes have created opportunities for new type of electrical power generation and storage systems from energy harvesting applications to balancing peak power from intermittent energy sources such as solar energy and wind power. These include electrolyser, fuel cells and flow batteries. Moreover, these ion exchange membranes serving as an electrolyte are also used in several energy consuming electrochemical industrial processes such as chlorine alkali production and water desalination.

The role of the membrane is to enable proton mobility and minimize reactant and reaction product crossover from the cathode to anode and *vice versa.* The ions migrate through water channels formed around the hydrophilic covalently bound dissociating ionic groups. The morphology of an ion exchange membrane depends on the chemical and physical nature of the backbone but also on the number and type of the immobile ion exchange groups. Consequently, structure of the formed water cannels varies. However, they are typically a few nanometer wide and percolate through the membrane enabling ion transfer. Besides the wanted counter ions transport, these water channels also enable transport of co-ions (Donnan equilibrium principle) and water soluble neutral molecules. This crossover results in unwanted side reactions, and in some applications also fouling, reducing the overall efficiency. Thus, the electrochemical applications would benefit if the membrane selectivity could be increased by hindering transport of fluids but still allowing ion transport.

Low temperature fuel cell operating at temperatures of 60-100°C fuelled with hydrogen or methanol is one of the electrochemical applications where proton conducting membranes are utilized. Centres of the electrochemical reactions i.e. hybrid electrodes with a three dimensional structure are pressed on both sides of the membrane electrolyte and the performance of the device is highly dependent on the properties of this membrane electrode assembly (MEA). Crossover of the reactants and products through the membrane is one of the phenomena decreasing overall performance of the fuel cell. When methanol or hydrogen fuel permeates through the membrane from the anode to the cathode fed by oxygen it readily reacts there under the high cathode potential. These unwanted side reactions lower the cathode potential, and the overall cell voltage decreases because of this overvoltage. Degradation of the membrane and resulting performance loss is another problem faced with fuel cells as the radicals formed during oxygen reduction reaction can attack the ion exchange polymer membrane electrolyte.

Several approaches have been suggested to overcome the fuel crossover problem, such as incorporating inorganic fillers into the cation exchange membrane body, depositing one or several metal layers on porous membranes, or use of composite solid polymer electrolyte membranes including interpenetrating structures of porous membrane substrate with an ion-conducting material.

One approach is to use a textured surface for the polymer electrolyte membrane. The texturing may be made by several different methods, such as etching or molding.

WO2004/001876 A2 discloses a metal-coated polymer electrolyte membrane permeable to protons and hydrogen and a method for producing it. The metal-coated polymer electrolyte membrane can be used as proton exchange membrane in liquid-type fuel cells to prevent fuel, gas and impurity crossover. The surface of the polymer electrolyte membrane is microstructured. It comprises a plurality of protrusions having surfaces not parallel to a central plane of the polymer electrolyte membrane. This textured surface is coated by depositing a metal film thereon, preferably comprising Pd, Pt, Nb, V, Fe, Ta or an alloy thereof. The metal-covered polymer electrolyte membranes are capable of maintaining the proton and hydrogen permeability in a humidified environment. US2012/135332 discloses a an electrolyte membrane for a fuel cell and a method for manufacturing thereof comprising a perfluorosulphonic acid body and a metal oxide thin film layer containing aluminium, wherein siad metal oxide thin film layer is permeable to proton. Yet, there is still a need to overcome the crossover problem with a simple and efficient way. Moreover, a durable cell construction having a long operational capability is yet desired.

### Summary of the invention

One object of the present invention is to provide an electrolyte membrane exhibiting a clearly decreased crossover.

Another object is to provide a method for producing an electrolyte membrane providing decreased crossover and having a long term stability and good durability.

A further object of the present invention is to integrate the electrolyte membrane providing deceased crossover in an electrochemical energy conversion device.

In the present disclosure an electrolyte membrane including at least one inorganic metal oxide thin film covalently bound to the electrolyte membrane body surface is depicted.

Nanolaminated membrane electrolytes i.e. membranes coated with nanometer range thin film layers are integrated into fuel cells to provide durability to membranes during the integration i.e. fabrication of the membrane electrolyte assembly (MEA) and operation of the electrochemical energy conversion device with gaseous or liquid fuel. The presently disclosed membrane construction shows improvement in both performance and durability.

The new type of functional structures of the present disclosure is applied for energy conversion in a fuel cell to increase the energy conversion efficiency and/or durability significantly. Molecular level controlled inorganic layered structures are synthetized on a surface of inherently inhomogeneous polymer electrolyte membrane bodies to combine the barrier properties of the inorganic material with flexibility and transport properties of the ion exchange membrane electrolyte. This novel approach results in a membrane with controlled transport properties and good mechanical durability.

The conditions for synthetizing different inorganic thin films i.e. nanolaminates or nanolaminated coatings in a way that covalently bound high quality inorganic material is obtained on the surface of various ion exchange membrane electrolytes are disclosed.

The present disclosure shows that fuel cell performance is increased by coating the ion exchange membrane functioning as an electrolyte with a thin metal oxide layer. Especially, using atomic layer deposition (ALD) method for producing these coatings in order to achieve a few nanometer thick high quality thin film layer that is covalently bond on the polymer electrolyte surface is preferred, wherein by high quality is meant those properties desirable for the present application. For example, the power density of a fuel cell increases slightly but also power maximum increases, possibly even by 20 %, when operating with an oxide coated hydrocarbon membrane. Moreover, stable operation of at least 500 h at about room temperature (e.g. 30 °C) is achieved.

### Figures

Figure 1 depicts the difference between surface modified membrane (a) and the coated membrane of the present disclosure (b).
Figure 2 shows a schematic layout of a proton exchange electrochemical cell.
Figure 3 shows polarization curves for ALD-Al₂O₃ coated and uncoated Nafion before and after the crossover test in DMFC.
Figure 4 shows power density plots for ALD-Al₂O₃ coated and uncoated Nafion before and after the crossover test in DMFC.
Figure 5 shows linear sweep voltammograms for MeOH crossover in the DMFC setup with ALD-Al₂O₃ coated and uncoated Nafion.
Figure 6 shows polarization curves for ALD-TiO₂ coated and uncoated Nafion before and after the crossover test in DMFC.
Figure 7 shows power density plots for ALD-TiO₂ coated and uncoated Nafion before and after the crossover test in DMFC.
Figure 8 shows linear sweep voltammograms for MeOH crossover in the DMFC setup with ALD-TiO₂ coated and uncoated Nafion.
Figure 9 shows polarization curves for ALD-Al₂O₃ coated and uncoated E-730 after the crossover test in DMFC.
Figure 10 shows power density plots for ALD-Al₂O₃ coated and uncoated E-730 after the crossover test in DMFC.
Figure 11 shows linear sweep voltammograms for MeOH crossover in the DMFC setup with ALD-Al₂O₃ coated and uncoated E-730.
Figure 12 shows polarization curves for ALD-Al₂O₃ coated and uncoated Nafion in H₂/air cell.
Figure 13. shows power density plots for ALD-Al₂O₃ coated and uncoated Nafion in H₂/air cell.
Figure 14 shows oxygen permeability measurements in the H₂/O₂ fuel cell for ALD-Al₂O₃ coated and uncoated Nafion.
Figure 15 shows polarization curves for ALD-Al₂O₃ coated and uncoated E-730 in H₂/air cell.
Figure 16 shows power density plots for ALD-Al₂O₃ coated and uncoated E-730 in H₂/air cell.
Figure 17 shows microbial fuel cell power density plots for ALD-Al₂O₃ coated and uncoated Nafion.
Figure 18 shows microbial fuel cell current density plots for ALD-Al₂O₃ coated and uncoated Nafion.
Figure 19 shows microbial fuel cell maximum power point results of two electrode linear sweep voltammograms over operation time for ALD-Al₂O₃ coated and uncoated Nafion.
Figure 20 shows microbial fuel cell open cell potentials over operation time for ALD-Al₂O₃ coated and uncoated Nafion.
Figure 21 shows the stability of the ALD-Al₂O₃ coated Nafion membrane in extended use.

### Detailed description of the invention

The invention is defined by the appended claims.

### Definitions

By an electrochemical cell is meant a device capable of either deriving electrical energy from chemical reactions or facilitating chemical reactions through the introduction of electrical energy. An electrochemical cell consists of two half-cells. Each half-cell consists of an electrode and an electrolyte. The two half-cells may use the same electrolyte, or they may use different electrolytes. The chemical reactions in the cell may involve the electrolyte, the electrodes, or an external substance such as hydrogen gas as a reactant in fuel cells. In a full electrochemical cell, species from one half-cell lose electrons (oxidation) to their electrode while species from the other half-cell gain electrons (reduction) from their electrode.

By a bioelectrochemical system (BES) is meant an electrochemical system in which biological processes catalyse electrochemical reactions. Examples of bioelectrochemical systems include microbial electrolysis cells, microbial fuel cells (MFC) and enzymatic biofuel cells and electrolysis cells, microbial electrosynthesis cells, and biobatteries. A bioreactor is divided in two parts i.e. the anode, where the oxidation reaction takes place and the cathode, where the reduction occurs. Electrical current is inherent to the microbial metabolism. Micro-organism transfers electrons from an electron donor (lower potential species) to an electron acceptor (higher potential species). If the electron acceptor is an external ion or molecule the process is called respiration. If the process is internal electron transfer is called fermentation. The microorganism attempts to maximize its energy gain by selecting the electron acceptor with the highest potential available. In nature mainly mineral containing iron or manganese oxides are being reduced. Often soluble electron acceptors are depleted in the microbial environment. The microorganism can also maximize their energy selecting a good electron donor which can be easily metabolized. These processes are done by extracellular electron transfer (EET). The theoretical energy gain ΔG for microorganism relates directly to the potential difference between the electron acceptor and the donor. But the inefficiencies like internal resistances will decrease this energy gain.

By a fuel cell (FC) is meant a device that converts the chemical energy from a fuel into electricity through a chemical reaction with oxygen or another oxidizing agent. Hydrogen is the most common fuel, but hydrocarbons such as natural gas and alcohols like methanol may be used. There are many types of fuel cells, but they all consist of an anode, a cathode and an electrolyte that allows charges to move between the two electrodes of the fuel cell. Even though fuel cells come in many varieties they all work in this same general manner. The chemical reactions occur at the interfaces of the three segments. The net result of the two reactions is that fuel is consumed, water or carbon dioxide is generated, and an electric current is induced. At the anode in an acidic cell, catalyst oxidizes the fuel, usually hydrogen, turning the fuel into a negatively charged electrons and positively charged protons. The electrolyte is a substance specifically designed so that ions can pass through it, but the electrons cannot. The freed electrons travel through a wire connecting the electrodes creating the electric current. The ions travel through the electrolyte from one of the electrodes to the other. Once reaching the cathode, the ions are reunited with the electrons and the two react with a third chemical, usually oxygen, to create water or carbon dioxide.

By a microbial fuel cell (MFC) is meant a bioelectrochemical system that drives the current by using bacteria and mimicking bacterial interactions found in nature i.e. it converts chemical energy to electrical energy by the catalytic reaction of microorganisms. MFCs can be grouped into two general categories, those that use a mediator and those that are mediator-less. In the MFCs using a mediator a chemical compound transfers electrons from the bacteria in the cell to the anode. In the mediator-less MFCs the bacteria typically have electrochemically active redox proteins such as cytochromes on their outer membrane that can transfer electrons directly to the anode.

By PEMFC is meant a proton exchange membrane fuel cell.

By DMFC is meant a direct methanol fuel cell.

### Electrolyte membrane

The first aspect of the present disclosure provides an electrolyte membrane. This electrolyte membrane needs to be suitable for use in an electrochemical cell. An ideal electrolyte membrane has high ion conductivity, high electrical resistance, low permeability to reactants, products and possible impurities in the electrochemical cell.

The ion exchange membranes used in fuel cells can roughly be divided into perfluorinated, partially fluorinated and hydrocarbon membranes. They consist of polymers with randomly distributed dissociating functional groups often located in side chain. Moreover, there are membranes impregnated with an acid. The most commonly used membrane is perfluorinated Nafion® 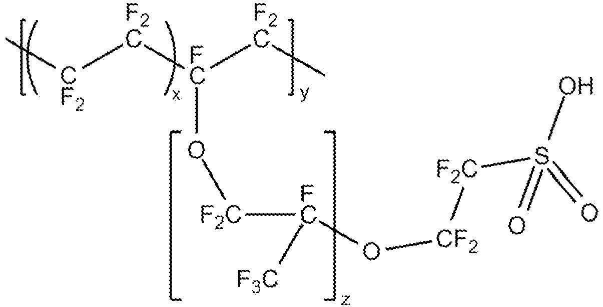 with ether linked side chains terminating in sulfonic acid groups exhibiting rather high conductivity and durability. These membranes are synthetized in a multi-step process under harsh energy consuming conditions resulting in low gain, and consequently, these membranes are expensive. Therefore, alternative lower cost partially fluorinated membranes or hydrocarbon membranes with aromatic back bone and dissociating sulfonic acid groups, e.g. sulfonate poly ether ether ketone (S-PEEK) 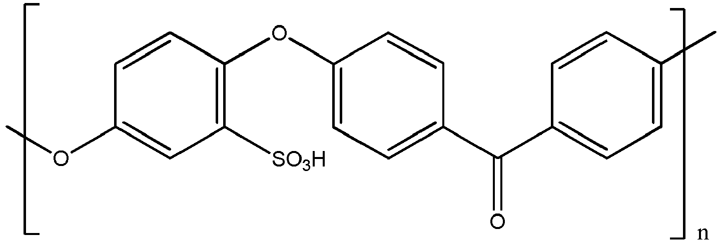 have been developed. However, these membranes are not as stable as perfluorinated ones under the harsh operation conditions.

In practise, none of the commercially available products are ideal. Typically applied electrolyte membranes exhibit some crossover. Other commercial membranes for e.g. PEMFC applications are available from e.g. Dow Chemicals, Asahi Glass Engineering such as Flemion® R, Asahi Kasei such as Aciplex-S®, W.L. Gore&Associates such as Gore-Tex® or Gore-Select® and 3P Energy.

To achieve full benefit from the direct energy conversion in electrochemical cells ion exchange membranes need to fulfill, besides the above described transport properties, at least some of the other, often contradicting, requirements: i) high ionic conductivity i.e. low area resistance, ii) low reactant and product crossover, iii) appropriate water management properties, iv) electrochemical, chemical, mechanical and morphological stability, v) compatibility with other fuel cell components, especially with the electrodes, and vi) acceptable costs. For example, the methanol fuel crossover through the membrane can be reduced by reducing membrane water up-take by decreasing number of functional ion exchange groups in the membrane, but this decreases simultaneously ionic conductivity.

In the present disclosure the electrolyte membrane suitable for use in an electrochemical cell, comprises a polymer electrolyte body and at least one metal oxide thin film layer on at least one surface of the polymer electrolyte body, wherein said metal oxide thin film layer is permeable to protons.

The polymer electrolyte body may be any membrane suitable for electrochemical cell electrolyte purposes. Advantageously, the membrane is commercially available. Most suitable alternatives are perfluorosulphonic acid membranes, for example Nafion® and sulphonated poly ether ether ketones, S-PEEK, such as E-730.

The polymer electrolyte membrane body may further include sulfonated derivatives of a polymer like a lyotropic liquid crystalline polymer, such as polybenzoxazole (PBO), polybenzothiazole (PBT), polybenzimidazole (PBI) polymers or polypara-phenylene terephthalimide (PPTA) polymers. It may further include sulfonated derivatives of a thermoplastic or thermoset aromatic polymers such as polyethersulfone (PES), polyetherethersulfone (PEES), polyarylsulfone, polyarylethersulfone (PAS), polyphenylsulfone (PPSU) and polyphenylenesulfone (PPS02) polymers, polyetherimide polymers and fluorinated polyimides, polyetherketone (PEK), polyetherketone-ketone (PEKK), polyetheretherketone- ketone (PEEKK) and polyetherketoneetherketone-ketone (PEKEKK) polymers. Sulfonated derivatives of a non-aromatic polymer, such as ionomers including carboxylic, phosphonic or sulfonic acid substituted perfluorinated vinyl ethers may be used, as well.

Moreover, the polymer electrolyte membrane may be a sulfonated derivative of blended polymers, such as a blended polymer of PEK and PEEK. It may further have a composite layer structure comprising two or more polymer layers such as Nafion® or PBI membranes coated with sulfonated polyetheretherketone (S-PEEK) or sulphonated polyetheretherketone-ketone (S-PEEKK). The polymer layers in a composite layer structure can be either blended polymer layers or unblended polymer layers or a combination of both.

In a preferred embodiment the polymer electrolyte body comprises an ion exchange membrane. The membrane may be anioinic or cationic but not non-inonic as charging is required. Preferably, a cation exchange membrane is used. More preferably, the polymer electrolyte membrane body comprises a cation exchange membrane including sulphonic acid groups. Alternatively, carbonyl acid group may be included in the membrane structure. The most preferred choice is a proton exchange membrane. A clear enhancement in crossover results is obtained in the presently disclosed MEAs using a perfluorosulphonic acid membrane body, such as Nafion®, or sulphonated polyether ether ketone membrane body, such as S-PEEK.

The water uptake and the resulting swelling of the membrane are factors to be considered. The hydrophilic ion exchange groups adsorb and desorb water and humidity causing the flexible membrane to swell and shrink depending on the ambient conditions. The swelling of the membrane body of the present disclosure is preferably less than 2 g H₂O/g dry membrane, more preferably less than 1.2 g H₂O/g dry membrane, most preferably from 0.01 to 1 g H₂O/g dry membrane. The swelling properties are dependent on the hydrophilic nature of the membrane.

The polymer electrolyte membrane body is preferably chemically stable to acids and free radicals, and thermo hydrolytically stable to temperatures of preferably at least 35 °C, more preferably at least 90 °C, most preferably at least 100 °C, such as 150 °C, possibly even up to 200 °C, depending on the membrane contruction. Higher temperature stability may be required e.g. for obtaining a uniform thin film coating when using the thin film coating methods such as ALD.

The polymer electrolyte membrane body according to the present disclosure has preferably an ion exchange capacity (IEC) of more than 0.01 meq/g dry membrane, more preferably more than 0.5 meq/g, most preferably more than 1 meq/g such as up to about 2 meq/g. If the ion exchange capacity remains low the electrical conductivity will not be high enough to enable reasonable current densities. On the other hand, increasing conductivity will increase the hydrophilic properties and thus decrease the structural strength of the membrane.

In one embodiment IEC of the polymer electrolyte membrane body is from 0.8 to 2 meq/g, and it is highly ion-conducting, preferably having a conductivity from about 0.01 to about 0.1 S/cm.

The thickness of the polymer electrolyte membrane body is preferably from 20 µm to 300 µm, more preferably from 50 µm to 250 µm, most preferably from 150 µm to 250 µm.

In the present disclosure the polymer electrolyte membrane body is coated with a metal oxide thin film layer to enhance the properties of the electrolyte membrane. The metal oxide thin film layer needs to be permeable enough to allow proton transfer but impermeable to other species in the electrochemical cell to control e.g. the crossover of the electrolyte membrane. Moreover, the benefits of both the membrane body and the metal oxide thin film can be combined providing flexibility, high ion conductivity and good barrier properties for e.g. undesired gaseous and liquid components, dissolved species, colloids and bacteria.

Crossover of the reactants reduces the performance and induces degradation of the membrane and catalyst materials. For example, methanol or hydrogen permeating from the anode to the cathode readily reacts under the high potential at the cathode causing mixed potentials and thus lowers the overall cell voltage. Methanol fuel is transported from the anode to the cathode through the membrane via water channels formed around the hydrophilic ion exchange groups. Therefore, it is consequently interlinked with proton transport. However, oxygen penetrates the membrane and diffuses from the cathode to the anode especially during start up and shut down processes when flow rates in the cathode and anode compartments are changing. Under these circumstances permeated oxygen induces at the anode oxidation of the carbon, which may be used as support-material for the nanosized noble metal catalyst particles or for integration of the enzyme or microbe, and membrane degradation. Carbon oxidation furthers leaching of the noble metals which decreases the electrochemical activity of the fuel cell. Moreover, the requirement of the microbes for anaerobicity needs to be fulfilled. On the other hand, on the catalyst material surface the fuel rich oxygen mixture induces free radicals attracting the functional ion exchange groups of the membrane resulting in loss of those or even in pinhole formation, thus further reducing the fuel cell performance and stability. Moreover, the free radicals formed during the oxygen reduction reaction on the cathode can intrude into the membrane and react with its chemical bonds causing membrane degradation. The exothermic reactions create local thermal gradients, enhancing dimensional changes that put strain on the membrane. Particularly, in an MFC set-up the control of the following cross-overs is of importance: anolyte organics to cathode that induce chemical and biological fouling on the catalyst; oxygen diffusion from catholyte to anolyte due to anaerobic requirement of exoelectrogenic bacteria and inducing aerobic biofilm formation on the membrane anode side; inorganic compounds diffusion to cathode that forms scaling; all components forming fouling and scaling that decrease proton transfer. Many of these disadvantages may be alleviated or inhibited by the use of a coated electrolyte membrane of the present disclosure.

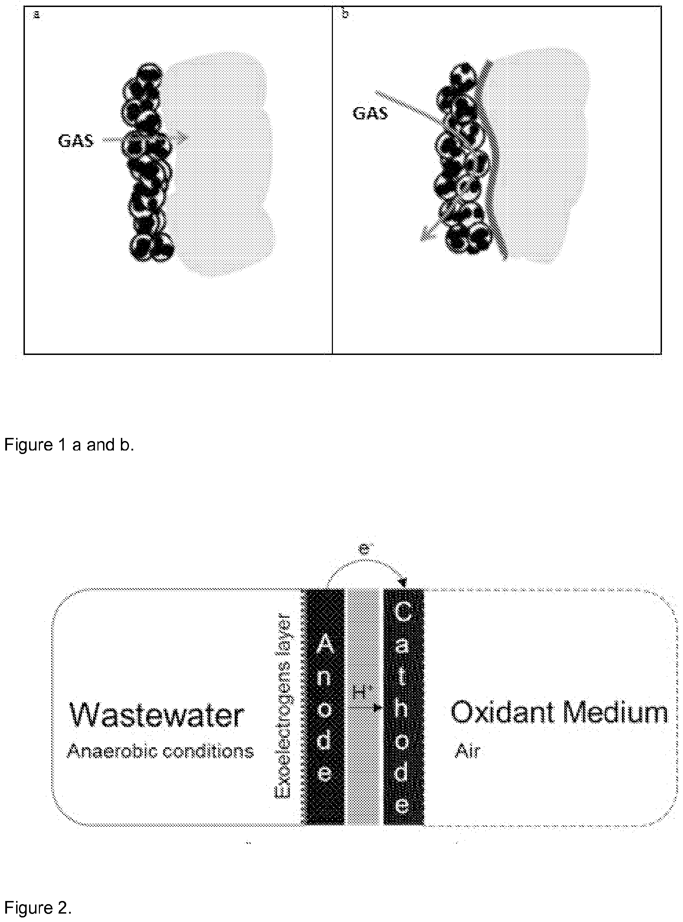

The crossover of anolyte in an electrochemical cell has been decreased by synthetizing hybrid inorganic/organic membranes by impregnating a membrane with organic or inorganic materials or their precursors followed by an insitu synthesis or solution casting dispersion of the ionic polymer and organic or inorganic particles. Another alternative to modify crossover through ion exchange membranes intended for fuel cells is to modify the membrane surface by immersing a membrane in dopamine solution, treating in perfluoroheptane and argon plasma or depositing a Pd based layer on the membrane. Liquid transfer is thus inhibited but not gas transfer as shown by figure 1 a. In the present disclosure a new approach is suggested so that the benefits of inorganic oxides and ion exchange membrane electrolytes are combined. This is achieved by synthetizing a thin inorganic layer on a surface of the ion exchange membrane body. A surface reaction between the polymer electrolyte membrane body and the thin film precursor results in an ideal case, in growth of one monolayer of the thin inorganic material across the surface of the membrane body. In this way, covalently bound thin film coating can be synthetized onto the polymer electrolyte surface controlling its thickness in molecular level. Thus, both liquid and gas transfer may be limited as shown by figure 1 b.

The metal oxide thin film may be deposited only on one side of the electrolyte membrane body or on both sides. In one embodiment metal oxide thin film is deposited on one side of the electrolyte membrane body to allow suitable moisture or water permeability. In another embodiment metal oxide thin film is deposited on both sides of the electrolyte membrane body.

The coating comprising metal oxide comprises two or several thin film layers. Furthermore, the metal oxide thin film may be doped by a suitable dopant altering the properties of the thin oxide film, or it may comprise a mixed metal oxide. Preferably, the metal oxide thin film layer is doped with an element selected from the group consisting of Ti, Zr, Ce and Si.

In one embodiment, the thin metal oxide film comprises an amorphous metal oxide. An amorphous metal oxide thin film was found to be adequately permeable to protons. Especially, amorphous aluminium oxide thin film is preferred.

The metal oxide thin film layer deposited on the membrane surface becomes covalently bound to the surface via the suitable surface sites of the membrane body. This well adhering metal oxide layer hinders both gas and liquid transfer into the membrane and increases the mechanical stability of the membrane. The soft membrane has nucleophilic sites whereto the metal oxide thin film is able to attach. Advantageously, the formed thin film conforms to the membrane surface, and it is able to at least partly penetrate even inside the membrane outer surface layer. The penetration depth may preferably be in the range of about 1 to 500 nm, more preferably from 1 to 150 nm, most preferably from 5 to 50 nm, such as from 5 to 30 nm, depending on the membrane and the metal oxide thin film material and quality.

In one embodiment the thickness of the metal oxide thin film layer is less than a monolayer or in a monolayer range depending on the composition, and the coating is permeable to protons. Especially, if the membrane is coated by both sides water permeability in addition to proton permeability is necessary. A submonolayer coating facilitates the permeability of water while simultaneously blocking to some extent the larger species present in the electrochemical cell.

Preferably, the thickness of the oxide thin film layer is from 1 to 1000 nm, preferably from 5 to 500 nm, more preferably from 10 to 200 nm. Depending on the material of the metal oxide thin film layer the proton permeability of the layer decreases as the thickness increases. Especially, when high current densities are required the film thickness needs to be near the lower limit.

In one embodiment the thickness of the oxide thin film layer is about from 1 to 100 nm corresponding to an atomic layer deposition cycle count in atomic layer deposition (ALD) method of from 10 to 10000.

The metal of the metal oxide thin film i.e. the primary metal oxide film preferably comprises aluminium, titanium, copper, silver and any combinations thereof. Most preferably, the metal comprises aluminium or titanium, or combination thereof due to the particularly suitable properties of the oxides. Moreover, using combination of metals in the metal oxide an enhancement in proton permeability and an increase in current density may be achieved.

In one embodiment the metal oxide layers comprise aluminium oxide. Preferably, the aluminium oxide is amorphous. The quality of the aluminium oxide film may vary depending on the manufacturing method. The aluminium oxide is preferably capable of providing conformal coating on the polymer electrolyte body and preferably penetrating into the surface layer of the material to be coated.

In another embodiment the metal oxide layers comprise titanium oxide. TiO₂ may provide an antibacterial effect inhibiting the membrane contamination if e.g. bacterial colony propagates into the membrane body.

In addition other metals are used as a secondary metal in the secondary metal oxide thin films. The secondary metal oxide thin film layer comprises copper or silver. For example, the antibacterial properties of Cu and Ag can be an advantage.

### Method for manufacturing the electrolyte membrane

The second aspect of the present invention provides a method for producing said electrolyte membrane. The electrolyte membrane comprising a polymer electrolyte body and at least one metal oxide thin film layer on a surface of the polymer electrolyte body, is prepared by
(i) providing a polymer electrolyte body, and
(ii) depositing on at least one surface of said polymer electrolyte body at least one metal oxide thin film layer.

The metal oxide thin film layer may be deposited by any method providing a thin film layer adhering well to the membrane body surface and withstanding the structural deformations occurring within the membrane body during use in an electrochemical cell.

Various thin metal oxide layers may be fabricated with numerous methods such as evaporation or magnetron sputtering, sol-gel deposition, electron beam evaporation, evaporation or plasma enhanced chemical vapour deposition (CVD) and atomic layer deposition (ALD). The most applied industrial coatings are made with vacuum deposition techniques, such as sputtering or CVD, as well as roll-to-roll plasma deposition from liquid precursors under atmospheric pressure.

In the ALD method, the reactions needed for the synthesis of the coating can take place at low temperature. The self-limiting surface site controlled process allows growth of conformal, uniform layer across the surface. Moreover, the thickness and composition of synthetized material can be controlled at molecular level, as the reactions are surface site controlled. This ALD film formation mechanism provides thin films with higher quality than other thin film methods, also on soft polymer membrane surfaces. ALD is used industrially for fabrication of electroluminescent displays, microelectronics and semiconductors.

The metal oxide thin film layer of the present disclosure is preferably deposited using a chemical vapour deposition (CVD) method or atomic layer deposition (ALD) method, more preferably by the ALD method.

In the CVD method the reactions take place in the gas phase. The deposition of the forming film occurs onto the polymer electrolyte membrane body, the formed film remaining on the surface thereof as a separate layer. Therefore, it is not possible to obtain conformal coating unless the surface to be coated is very smooth or non-porous. Typically, the adhesion to the carrier surface is weak.

In ALD surface reactions between the substrate i.e. the polymer electrolyte membrane body and the metal precursor take place resulting in good adhesion of the forming thin metal oxide film onto the substrate. Moreover, the ALD surface reactions enable the penetration of the growing film into the structure of the polymer electrolyte membrane body. The precursor of the growing film penetrates into the membrane body and subsequently reacts therein. The resulting reaction product may thus penetrate deeper into the porous membrane bulk structure, not just remain on the surface layer thereof due to precursor penetration and attachment. This is especially advantageous as the membrane body does not offer a rigid surface but is swelling and shrinking depending on the ambient conditions. The metal oxide film growth proceeds monolayer by monolayer by sequentially introducing the precursor components across the surface of the substrate. In this way, covalently bound thin coating can be synthetized on the polymer electrolyte surface controlling its thickness via surface reactions. High quality thin films can be synthetized on polymer substrates using ALD, exceeding the quality obtained by other thin films deposition methods.

ALD is preferably used for synthetizing of high quality thin film, preferably from about 1 to 1000 nm thick inorganic layers. This is challenging due to the use of an unconventionally soft and inhomogeneous membrane body as substrate which may be deforming due to its water content, and moreover, because the properties of the nanolaminate consisting of inorganic components are unpredictable. The coated membrane of the present disclosure allows transport of the charge carrying ions while it efficiently prevents crossover of other species participating in energy consuming side reactions. Such tailoring of the membrane properties improves energy conversion in e.g. fuel cell applications fuelled by biofuels where crossover is a severe problem. Moreover, the durability of the coated membrane may be enhanced as the nanolaminate coating may protect the membrane against radicals and heat generated in the electrochemical reactions, and it further provides mechanical support. Especially fuel cells benefit clearly from the controlled transport whereas the changing humidity and temperature conditions and intimate contact between the electrodes and the membrane electrolyte render fuel cells as very demanding and harsh environment, and therefore, attractive application for integration of nanolaminated membranes. These high quality nanometer thick inorganic nanolaminates may ensure an ion exchange membrane with controlled barrier and transport properties. The thin and possibly amorphous inorganic layer can allow the required transport of protons through the membrane and it may simultaneously reduce diffusion of the reactants, products and radicals. Furthermore, this layer can also act as thermal insulator by forming a physical barrier on the soft polymer membrane surface.

ALD is based on surface site controlled reactions which initiate in case of soft polymers on nucleophilic sites. Layer by layer film growth takes place and the surface is saturated by chemisorption enabling precise control of film growth and thickness. However, unlike in the case of hard solid surfaces, precursors can penetrate under the polymer surface and the progress of the reaction depends on the balance between the diffusion barrier for the precursor penetrating under the polymer surface and the reaction barrier for initiating the reaction on the surface. Consequently, effect of the deposition temperature on the rate and quality of the formed oxide layer varies for one polymer to another. Additional challenge in the case of an ion exchange membrane is to deposit a high quality coating without pinholes on the inherently inhomogeneous polymer as the high quality is of utmost importance so that the thin film prevents gas and liquid transport but allows migration of ions. In case the oxide layer is too thick it retards also ion transport and can even prevent it at low operation temperatures.

In one embodiment, the preferred deposition temperature is less than 200 °C, more preferably less than 150 °C, most preferably less than 100 °C, such as less than 90 °C. Typically, the temperature is above 0 °C such as at or above room temperature. The deposition temperature depends on the selected precursors for thin film growth and the film composition aimed at. A high enough vapour pressure is required to provide the desired amount of material onto the membrane surface. The temperature resistance of the polymer membrane body must be considered, as well. The deposition temperature has a further effect on the quality of the formed thin film such as impurity content and defects in the film.

The precursor to be used in manufacturing the thin metal oxide film onto the polymer electrolyte membrane body should be capable of reacting efficiently with the constituents of the polymer membrane, such as oxygen therein. This reaction ensures the formation of covalent bonding and enhances the durability of the thin film on the membrane body surface.

The extent of reactions in ALD depends on temperature and exposure time as well as on the specific nature of the reacting groups including their local environment. Unlike for the conventional hard substrate surface, the precursor can diffuse under the soft polymer body surface. So, the progress of the synthesis depends on the interplay of two temperature dependent phenomena, *i.e.* the diffusion barrier for precursor penetration into the polymer and the reaction barrier for initiation of the reaction. Consequently, different kinds of temperature dependencies apply for different polymers. Furthermore, the precursor affects the properties of the thin layer arising from differences in permeability and reactivity of the precursors with the same polymer substrate. The reaction is expected to initiate at nucleophilic groups of the polymer whereas the number and location of these groups may vary greatly from one ion exchange membrane to the other.

The deposition time has an influence in the penetration of the precursor into the electrolyte membrane body surface. The longer the exposure time the deeper the penetration of the deposition material. Preferably, the deposition time in the ALD deposition is from 0.1 s/cycle to 10 s/cycle.

In one embodiment the thin metal oxide layer thickness is from about 1 to 1000 nm.

In one embodiment the thin metal oxide layer thickness is from 5 to 500 nm.

In yet one embodiment the thin metal oxide layer thickness is from 10 to 200 nm.

In one embodiment the precursor for the metal in the metal oxide thin film comprises an organometallic compound. Certain organometallic compounds have high volatility, high vapour pressure and low operating temperature matching well with the requirements of the membrane.

In one embodiment the precursor comprises a metal alkyl compound. There are several commercial metal alkyl compounds available, especially suitable for use in ALD depositions, providing good quality thin films.

In one embodiment the precursor is an aluminium alkyl compound, preferably trimethyl aluminium.

One choice for a precursor of the metal in the metal oxide thin film is a metal-halogen compound. There are several high vapour pressure metal-halide compounds suitable for use in thin film depositions, at a low temperature, even at room temperature.

In one embodiment a metal chloride compound having volatility suitable for processing at a temperature of 200 °C or below is used as precursor. Preferably, the precursor is titanium chloride compound, such as titanium tetrachloride, for thin Ti containing film depositions, such as TiO₂ films.

When forming the metal oxide thin film by an ALD method the metal precursor purge is typically followed by oxygen containing gas precursor purge thus forming eventually the metal oxide layer. The layer produced by the purging sequence may be submonomolecular, monomolecular or several monolayers thick. The growth rate of the forming thin film depends on several processing parameters. Preferably, the metal precursor pulse is followed by a water pulse. It is also possible to decompose the metal precursor thermally onto the membrane surface.

In one embodiment aluminium oxide thin film layers are formed by alternating metal alkyl precursor, preferably trimethyl aluminium or the like, and water.

In another embodiment titanium oxide thin film layers are formed by alternating metal halide precursor, preferably titanium tetrachloride or the like, and water.

There are several different material layer sequences that can be constructed by alternating the different metal oxide thin film layers. One further option is to include metal doping into the thin film metal oxide layer using a metal different from the metal oxide metal. By modifying the thin film metal oxide layer composition varying proton and ion transfer properties may be created for the electrolyte membrane coating.

As physical barriers, the disclosed nanolaminate coatings ensure transport of the desired co-ions and reduce crossover of the unwanted components and thus, they increase the electrochemical system overall efficiency. In addition, they further improve stability and durability of the system by protecting the membrane electrolyte body against mechanical stress, fouling, radicals and heat.

### Use of the electrolyte membrane in an electrochemical cell

The third aspect of the present disclosure provides an electrochemical cell construction utilizing the above described electrolyte membrane comprising the thin metal oxide film.

In one embodiment the electrolyte membrane, as discussed above, is used in an electrochemical cell for reducing crossover through said electrolyte membrane. By crossover is meant fuel crossover such as hydrocarbon constituents migrating across the membrane, cation transfer through the membrane, oxygen transfer or water transfer. Reducing crossover enables increased power density for the cell.

In a further embodiment the electrochemical cell including the electrolyte membrane of the present disclosure is a bioelectrochemical system or a fuel cell.

The bioelectrochemical systems (BES) use biocatalysts to drive oxidation and reduction reactions at solid-state electrodes. Possible processes include bioelectrochemical degradation, such as in MFC and MEC, resource recovery, such as N, K, P, Fe and/or other metals, microbial electro-synthesis such as organics e.g. CH₄, H₂, H₂O₂ and/or alkali.

In yet another embodiment the electrochemical cell including the electrolyte membrane of the present disclosure is a hydrogen-oxygen fuel cell, direct methanol fuel cell (DMFC) or microbial fuel cell (MFC).

The present disclosure further provides a microbial fuel cell (MFC), comprising
(i) an anode
(ii) a cathode
(iii) hydrocarbon containing liquid fuel as anolyte in the anode compartment
(iv) catholyte in the cathode compartment, and
(v) electrolyte membrane according to the present disclosure, as discussed above.

The anode of the MFC preferably comprises a biocompatible electrically conductive material, such as carbon fiber or graphite, and eventually, under operation micro-organisms, such as exoeletrogenic microbes, capable of reducing the anolyte hydrocarbon fuel.

The micro-organisms of the MFC anode comprise exoelectrogens. An exoelectrogen i.e. exoeletrogenic microbe normally refers to a microorganism that has the ability to transfer electrons extracellularly. Conventional cellular respiration requires a final electron acceptor to receive these electrons. The final electron acceptor of an exoelectrogen is found extracellularly and can be a solid conductor/electron acceptor. In one embodiment, the anode compartment of the MFC is anaerobic. Enabling the electron transfer from exoelectrogens to solid electrode require an anaerobic ambient.

The cathode of MFC comprises a chemical catalyst material and an electrically conductive material. The cathode material comprises of e.g. carbon fiber or graphite coated with a catalyst material. Preferably this catalyst is a catalytically active material or their composite such as noble metal, e.g. Pt and Rh, or carbon based material, e.g. activated carbon and carbon nanotube.

Preferably, the hydrocarbon containing liquid fuel comprises a source of hydrogen capable of being liberated under a biochemical reaction, and acting as the fuel. This hydrocarbon preferably comprises a sugar, alcohol or volatile fatty acid or derivative thereof, more preferably C1-C6 fatty acid or derivative thereof. The hydrocarbon containing liquid fuel may comprise process water or waste water from different industrial or municipal sources. Preferably, hydrocarbon containing liquid fuel originates from food or beverage industry or from pulp and paper industry, more preferably from brewery or soft drink industry.

In one embodiment the organic content of the hydrocarbon containing liquid fuel may have a COD value of 100-100000 mg/l, preferably 300-10000 mg/l, more preferably 1000-5000 mg/l.

Hydrogen is the most studied and utilized fuel for polymer electrolyte fuel cells resulting in on-site zero-emissions. Though, its delivery and storage is challenging, hydrogen is the choice of major vehicle companies. Though need for cost reductions and future development of the technology is generally recognized, major vehicle companies are constructing assembly lines for fuel cell vehicles with promise to bring fuel cell vehicles into the market in the near future. Another commercially accepted fuel is methanol because of its high energy density, easy transportation, storage and handling. The direct methanol fuel cells (DMFC) are applied in military, emergency backup power and recreational uses, e.g. camping and boating.

In one embodiment the present disclosure provides a proton exchange membrane fuel cell (PEMFC), wherein said fuel cell comprises
(i) an anode
(ii) a cathode
(iii) hydrogen containing anolyte in the anode compartment
(iv) oxygen containing catholyte in the cathode compartment, and
(v) electrolyte membrane according to the present disclosure, as depicted above.

In yet another embodiment the present disclosure provides a direct methanol fuel cells (DMFC) wherein said fuel cell comprises
(i) an anode
(ii) a cathode
(iii) methanol containing anolyte in the anode compartment
(iv) oxygen containing catholyte in the cathode compartment, and
(v) electrolyte membrane according to the present disclosure, as depicted above.

In a DMFC the oxidation of methanol takes place on a catalyst layer to form carbon dioxide. Water is consumed at the anode and is produced at the cathode. Protons are transported across the proton exchange membrane according to the present disclosure to the cathode where they react with oxygen to produce water.

Besides the fuel cells, the ion exchange membranes of the present disclosure may serve as an electrolyte and separator in several commercial and industrial applications including electrodialysis, water demineralization, such as desalination, chlorine alkaline factories and electrolyzers, such as hydrogen generation from water, potentially benefiting from more controlled transport. Moreover, important application can be also found in other sustainable energy storage and conversion applications, such as flow batteries.

The present disclosure enables new approaches in surface functionalization and production of tailored and controlled properties for membranes for yet unknown applications.

Excellent efficiency in electrochemical applications, such as fuel cell fueled by biofuels, is achieved utilizing the nanolaminate coated polymer electrolyte membranes of the present disclosure. Increase in efficiency results either from decrease of overpotentials related to the crossover (in galvanic cells) or from lower electric power losses (in electrolysis cells). Moreover, costs savings can be achieved as the nanolaminate protects the membrane against degradation induced by heat and radicals generated in the electrochemical reactions. This allows longer operation of the system and/or replacement the currently used expensive perfluorinated ion exchange membranes with less expensive hydrocarbon based nanolaminate coated materials.

Hereafter, the present disclosure is described in more detail and specifically with reference to the examples which are not intended to limit the present disclosure.

### Examples

### Example 1.

A direct methanol fuel cell (DMFC) was used comprising the following components:
A Pt/Ru diffusion electrode was used as the anode material and a Pt diffusion electrode as the cathode material, with 0.5 mg/cm² of metal on both the electrodes.

1 M aqueous CH₃OH was used as an anolyte (CE/RE) and air as a catholyte (WE), in anodic and cathodic chambers, respectively.

A proton exchange membrane having ALD Al₂O₃ coating on one side of a Nafion® membrane by using TMA and water, wherein the thin film thickness was about 100 nm, comprising pulsing of 1000 cycles TMA and H₂O precursors with deposition sequence 5.0 s TMA, 30 s N₂, 5.0 s H₂O, 40 s N₂ at the temperature of 85 °C.

A proton exchange membrane of ALD TiO₂ was coated using the same parameters as the ALD Al₂O₃, but the precursor was TiCl₄.

Methanol crossover was measured by feeding N₂ to the cathode.

### Example 2.

The cell used in the polarization and power density measurements was the same as in DMFC experiments of example 1, except that methanol was replaced by H₂. Air was used as the oxidant.

Oxygen crossover was measured in a separate cell construction (H₂/O₂ cell). A Pt diffusion electrode with 0.5 mg/cm² metal was used as both the anode and the cathode material. N₂ was fed to the anode and O₂ to the cathode.

### Example 3.

A microbial fuel cell (MFC) construction for one particular solution was used according to figure 2 with direct electron transfer anode and an air cathode. The separator between the anode and the cathode targeted for at least some of the following properties: enabling proton transfer, preventing short circuit, minimizing water transfer to air, minimizing oxygen transfer to anode, minimizing substrate transfer to cathode and/or minimizing cation (other than proton) transfer to cathode.

The components of the cell included carbon cloth as anode material, and carbon cloth with a catalyst, such as Pt, as cathode material. Waste water from food and beverage industry was used as anolyte, and air as catholyte in anodic and cathodic chambers, respectively.

ALD Al₂O₃ coated on one side of a Nafion® membrane served as a proton exchange membrane wherein the Al₂O₃ originated from TMA and water pulsing. The thin Al₂O₃ film thickness was about 100 nm, manufactured using 1000 cycles TMA and H₂O as precursors with a deposition sequence of 5.0 s TMA pulse; 30 s N₂ purge ; 5.0 s H₂O pulse; 40 s N₂ purge. The manufacturing temperature was about 85 °C.

The oxidizing fuel was a waste water organic component and the oxidizing agent was oxygen. Electrical current was collected from anode with SS mesh and transported to cathode via external circuit to SS mesh. An adjustable external resistor was connected to the external circuit.

### Example 4.

Polarization curves were measured using the cell construction of Example 1.

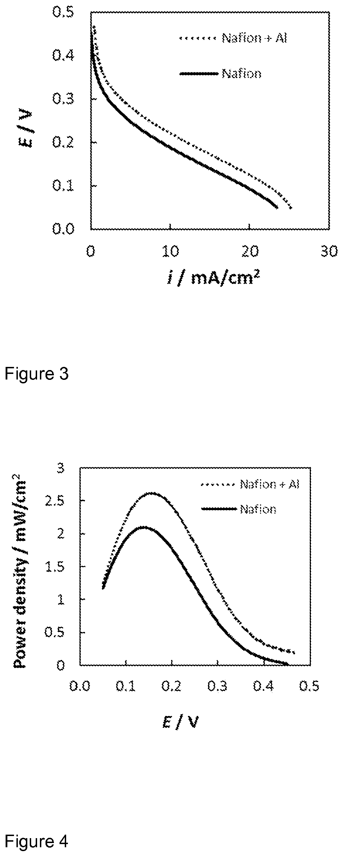

Figure 3 black line shows a comparative I-E measurement performed using an uncoated (pristine) Nafion® membrane, Nafion 115. The I-E measurement was repeated using a Nafion® membrane, Nafion 115, with the ALD- Al₂O₃ coating (dotted line). Catalyst content was 0.5 mg/cm², fuel was 1 M MeOH, oxidant was air, T = 30 °C.

Figure 4 shows the corresponding P-E charts: Power density plots for the top performance with pristine Nafion 115 and Nafion 115 with Al2O3 coating. Catalyst content: 0.5 mg/cm², fuel: 1 M MeOH, oxidant: air, T = 30 °C. The power was clearly higher with the coated membrane compared to the pristine membrane.

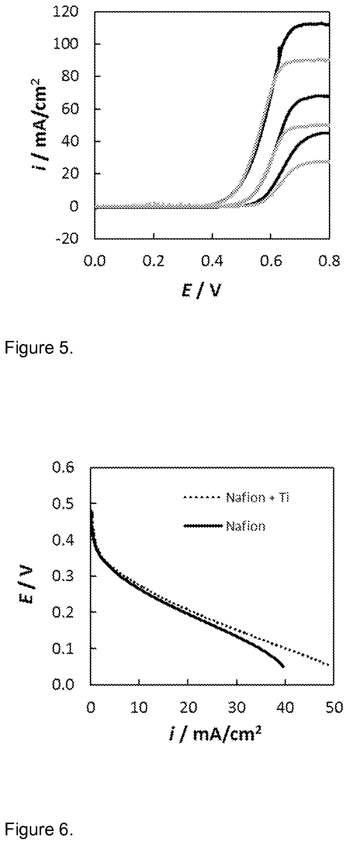

Figure 5 shows the results of the methanol crossover test at temperatures 30, 50 and 70 °C for uncoated Nafion 115 (black lines) and ALD Al₂O₃ coated Nafion 115 (grey lines). Methanol oxidation at the cathode resulted in limiting current as the diffusion through the membrane limits the oxidation rate. Clear decrease in the limiting current, and therefore, decrease in the methanol permeability is seen with the coated membrane.

### Example 5.

Polarization was measured from a cell construction according to Example 1. Figure 6 black line shows a comparative I-E measurement performed using an uncoated Nafion® membrane. The I-E measurement was repeated using a Nafion® membrane with the ALD- TiO₂ coating (dotted line).

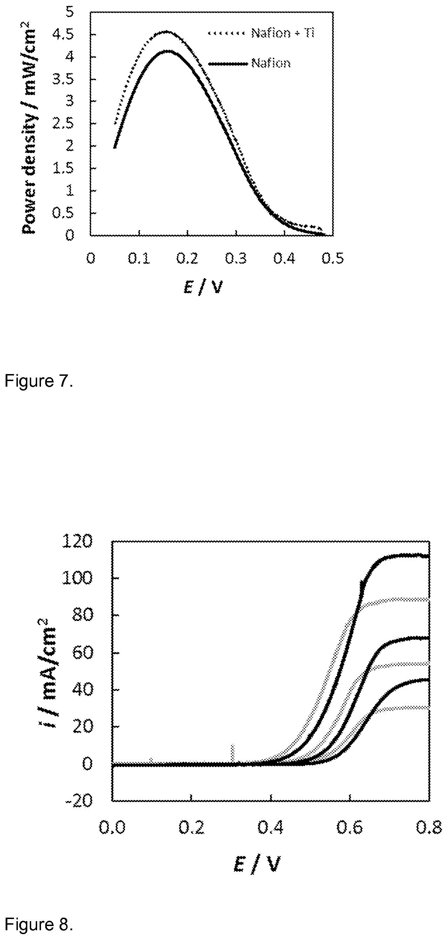

Figure 7 shows the corresponding P-E charts. The coated membrane shows higher power density compared to the pristine membrane, namely about 4.6 vs. 4.1 mW/cm².

Figure 8 shows the results of the methanol crossover test (linear sweep voltammograms for MeOH permeability in the DMFC setup with PtRu anode and Pt cathode with pristine Nafion 115 (black lines) and TiO₂ coated Nafion 115 (grey lines)) at temperatures 30, 50 and 70 °C. Clear decrease in the limiting current indicates decrease in the methanol permeability for the coated material.

### Example 6.

Polarization was measured according to the cell construction in Example 1: Catalyst content: 0.5 mg/cm², fuel: 1 M MeOH, oxidant: air, T = 30 °C.

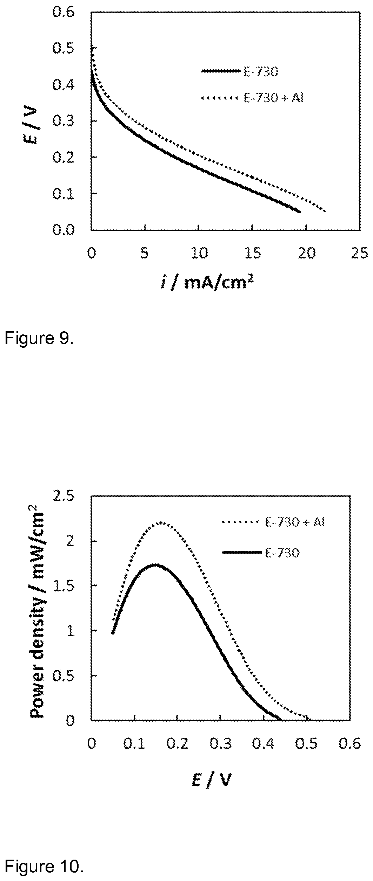

Figure 9 black line shows a comparative I-E measurement performed using an uncoated E-730 membrane. The I-E measurement was repeated using an E-730 membrane with the ALD-Al₂O₃ coating (dotted line).

Figure 10 shows the corresponding P-E charts. The coated E-730 provides clearly higher power density compared to the uncoated E-730, namely about 2.2 vs. 1.7 mW/cm².

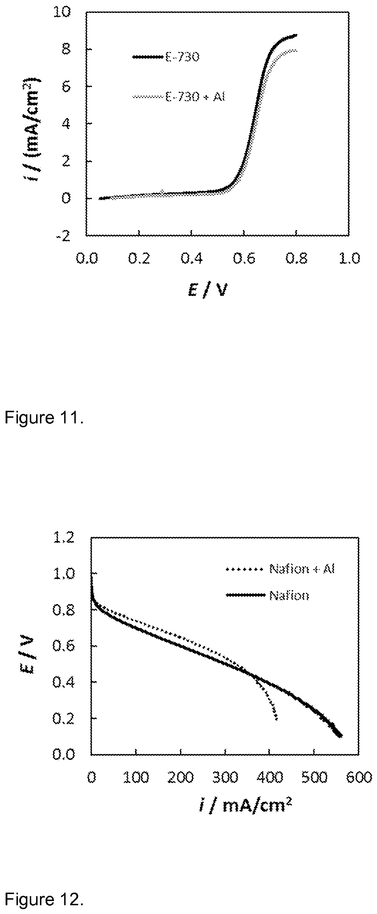

Figure 11 shows the linear sweep voltamograms of the methanol crossover test for ALD-Al₂O₃ coated and uncoated E-730 (DMFC setup with PtRu anode and Pt cathode). Decrease in the limiting current indicates lower methanol permeability with the coated E-730.

### Example 7.

Polarization curves were measured for the top performance with pristine Nafion 115 and Nafion 115 with Al₂O₃ coating. Catalyst content: 0.5 mg/cm², fuel: H₂, oxidant: air, T = 30 °C, in the H₂/air cell as described in Example 2.

Figure 12 black line shows a comparative I-E measurement performed using an uncoated Nafion membrane. The I-E measurement was repeated using a Nafion membrane with the ALD-Al₂O₃ coating (dotted line).

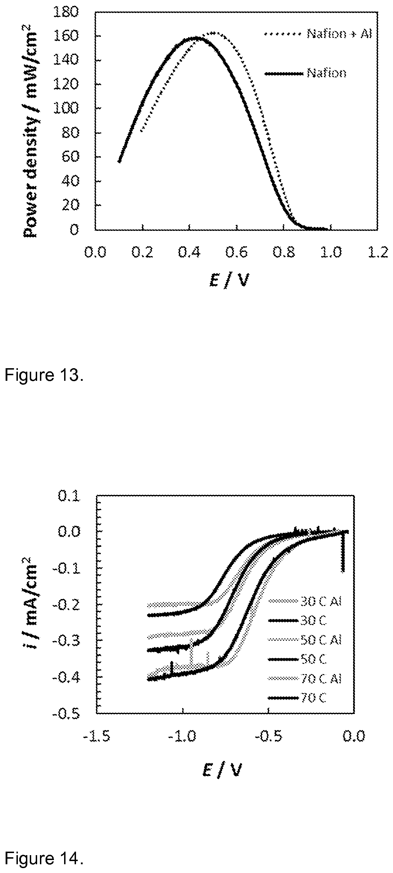

Figure 13 shows the corresponding P-E charts. Power density is higher with the coated Nafion.

Figure 14 shows the oxygen permeability measurement as described in Example 2 at temperatures 30, 50 and 70 °C for uncoated Nafion 115 (black lines) and ALD Al₂O₃ coated Nafion 115 (grey lines). Decreased oxygen crossover is seen with the coated Nafion.

### Example 8.

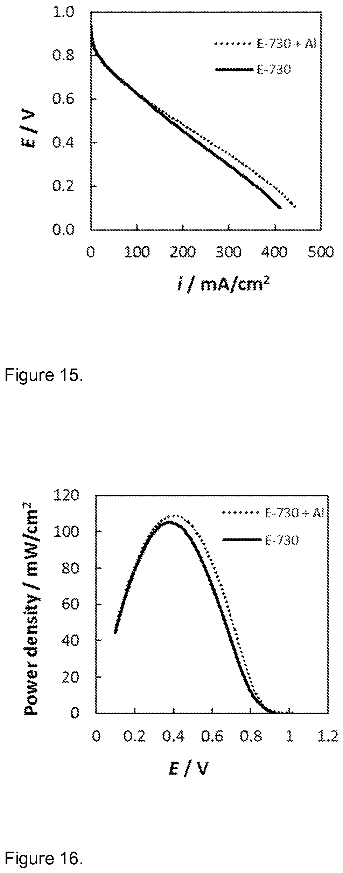

Polarization curves were measured in the H₂/air cell as described in Example 2. Figure 15 black line shows a comparative I-E measurement performed using an uncoated E-730 membrane. The I-E measurement was repeated using an E-730 membrane with the ALD-Al₂O₃ coating (dotted line).

Figure 16 shows the corresponding P-E charts: Catalyst content: 0.5 mg/cm², fuel: H₂, oxidant: air, T = 30 °C. Power density is higher with the coated E-730 compared to the uncoated membrane, namely about 110 vs. 105 mW/cm².

### Example 9.

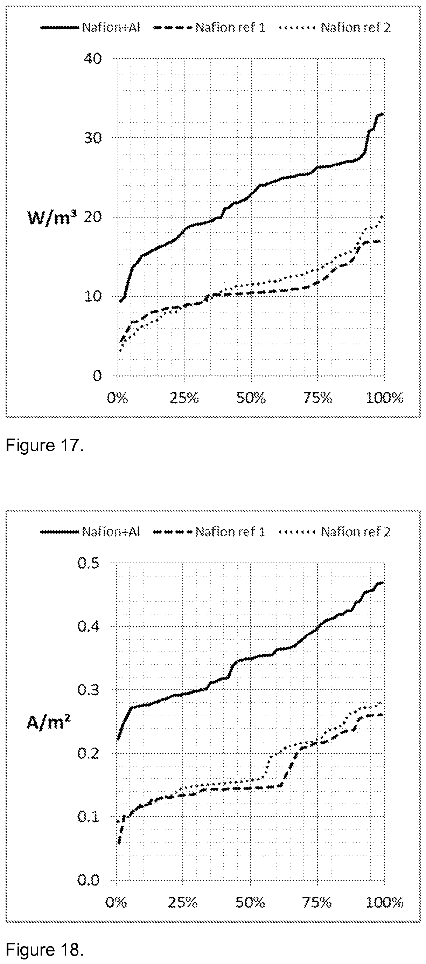

The microbial fuel cell MFC with pristine Nafion 115 and Nafion 115 with ALD Al₂O₃ coating was operated according to the schematic construction described in the Example 3. The measured results are provided by figures 17, 18, 19 and 20.

Figure 17 describes the specific power production. The power density values are calculated as produced power per reactor anode volume. Power plot is percent of daily average values equal to or less than indicated value of continuous run. Datapoint numbers for Nafion+Al, comparative membranes Nafion ref 1 and Nafion ref 2 are 61, 48 and 62, respectively. Catalyst content: 2.0 mg/cm², fuel: food and bewerage wastewater, oxidant: air, T = 30 °C.

Figure 18 describes specific current with pristine Nafion 115 and Nafion 115 with Al₂O₃ coating during continuous operation. The current density values are calculated as produced current per reactor cathode electrode area. The solid line shows the Al₂O₃ coated Nafion reactor results and the dotted lines shows the uncoated reference reactors results.

The results shown in figures 17 and 18 indicate strongly the enhancement of the MFC operation via current and power production increase with Al₂O₃ coated Nafion compared to comparative membranes.

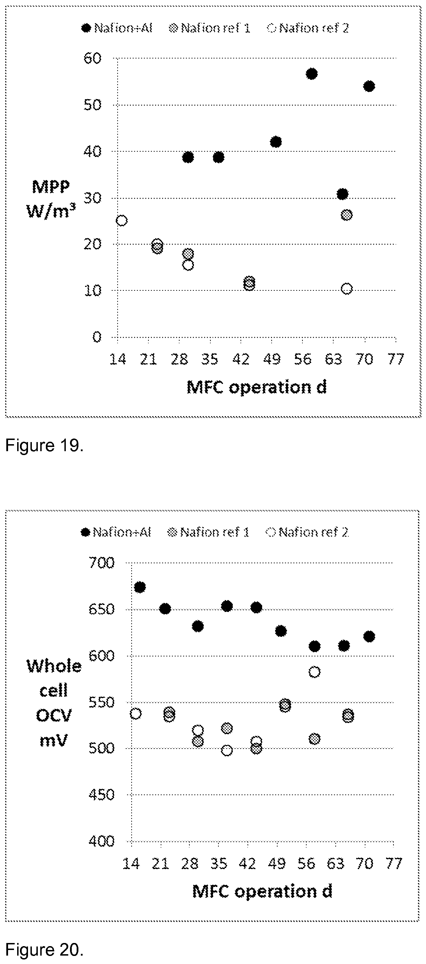

Figure 19 describes the manual single LSV (linear sweep voltammogram) scan results as maximum power points (MPP) with pristine Nafion 115 and Nafion 115 with Al₂O₃ coating (catalyst content: 2.0 mg/cm², fuel: food and bewerage wastewater, oxidant: air, T = 30 °C). The black dots show the Al₂O₃ coated Nafion reactor results and the grey and white dots show the uncoated reference reactors results. The results show the higher inherent maximum power production potential of the Al₂O₃ coated Nafion compared to the membranes without the coating. Moreover, the high MPP of Al₂O₃ coated Nafion is maintained throughout the test run.

Figure 20 shows the manual single open cell voltage (OCV) results over the operation time (d) with pristine Nafion 115 and Nafion 115 with Al₂O₃ coating (Catalyst content: 2.0 mg/cm², fuel: food and bewerage wastewater, oxidant: air, T = 30 °C). The black dots depict the Al₂O₃ coated Nafion reactor results and the grey and white dots depict the uncoated reference reactors results. The OCV is measured by the potential difference between anode and cathode electrodes without external resistor. The theoretical maximum is around 1.1-1.2 V. The higher OCV voltage of Al₂O₃ coated Nafion compared to uncoated Nafion indicates the higher power harvesting potential.

### Example 10.

The DMFC with Nafion 115 with ALD Al₂O₃ coating was operated according to the schematic construction described in the Example 1.

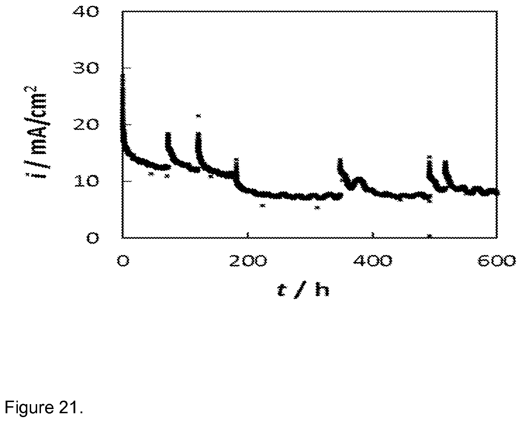

Figure 21 shows the chronoamperometric results at 170 mV. Good stability was observed even at 600 h of operation.

## Claims

1. An electrolyte membrane suitable for use in an electrochemical cell, comprising a polymer electrolyte body and at least one metal oxide thin film layer deposited by atomic layer deposition (ALD) method on at least one surface of the polymer electrolyte body, wherein said metal oxide thin film layer is permeable to protons, **characterised in that** the metal oxide thin film layer further comprises in addition to this primary metal oxide thin film layer, at least one secondary metal oxide thin film layer selected from copper or silver, provided that the metal is different than in the first metal oxide thin film layer.

2. The electrolyte membrane according to claim 1, wherein the polymer electrolyte body comprises an ion exchange membrane, preferably a cation exchange membrane, more preferably a cation exchange membrane including sulphonic acid groups, most preferably a proton exchange membrane.

3. The electrolyte membrane according to claim 1 or 2, wherein the polymer electrolyte body is perfluorosulphonic acid membrane.

4. The electrolyte membrane according to any one of claims 1-3, wherein the metal of the metal oxide thin film comprises aluminium, titanium, copper or silver, preferably aluminium or titanium, more preferably aluminium.

5. The electrolyte membrane according to any one of claims 1-4 wherein the thickness of the metal oxide thin film is from 1 to 1000 nm, preferably from 5 to 500 nm, more preferably from 10 to 200 nm.

6. The electrolyte membrane according to any one of claims 1-5 wherein the metal oxide thin film is capable of forming a conformal coating on the polymer electrolyte body.

7. A method for manufacturing an electrolyte membrane comprising a polymer electrolyte body and at least one metal oxide thin film layer on a surface of the polymer electrolyte body, wherein said method comprises the steps of
(i) providing a polymer electrolyte body, and
(ii) depositing on at least one surface of said polymer electrolyte body at least one metal oxide thin film layer wherein the metal oxide thin film layer is deposited using atomic layer deposition (ALD) method,
wherein the metal oxide thin film layer further comprises in addition to this primary metal oxide thin film layer, at least one secondary metal oxide thin film layer selected from copper or silver, provided that the metal is different than in the first metal oxide thin film layer.

8. The method according to claim 7, wherein the precursor for the metal of the metal oxide thin film is an organometallic compound, preferably metal alkyl compound, more preferably aluminium alkyl compound, most preferably trimethyl aluminium; or a metal chloride compound having volatility suitable for processing at a temperature of 200 °C or below, preferably TiCl₄.

9. Use of the electrolyte membrane according to any one of claims 1-6 in an electrochemical cell for reducing crossover through said electrolyte membrane.

10. A microbial fuel cell (MFC), wherein said fuel cell comprises
(i) an anode
(ii) a cathode
(iii) hydrocarbon containing liquid fuel as anolyte in the anode compartment
(iv) catholyte in the cathode compartment, and
(v) the electrolyte membrane according to any one of the claims 1-6.

11. A direct methanol fuel cell (DMFC), wherein said fuel cell comprises
(i) an anode
(ii) a cathode
(iii) methanol as anolyte in the anode compartment
(iv) catholyte in the cathode compartment, and
(v) the electrolyte membrane according to any one of the claims 1-6.

12. A proton exchange membrane fuel cell (PEMFC), wherein said fuel cell comprises
(i) an anode
(ii) a cathode
(iii) hydrogen containing anolyte in the anode compartment
(iv) oxygen containing catholyte in the cathode compartment, and
(v) the electrolyte membrane according to any one of the claims 1-6.

## Patentansprüche

1. Elektrolytmembran, die sich zur Verwendung in einer elektrochemischen Zelle eignet, umfassend einen Polymer-Elektrolyt-Körper und mindestens eine Metalloxid-Dünnfilmschicht, die durch das Verfahren der Atomschicht-Abscheidung (ALD) auf mindestens einer Fläche des Polymer-Elektrolyt-Körpers abgeschieden wird, wobei die Metalloxid-Dünnfilmschicht durchlässig für Protonen ist, **dadurch gekennzeichnet, dass** die Metalloxid-Dünnfilmschicht ferner zusätzlich zu dieser primären Metalloxid-Dünnfilmschicht mindestens eine sekundäre Metalloxid-Dünnfilmschicht umfasst, die aus Kupfer oder Silber ausgewählt wird, vorausgesetzt dass das Metall ein anderes ist, als das Metall in der ersten Metalloxid-Dünnfilmschicht.

2. Elektrolytmembran nach Anspruch 1, wobei der Polymer-Elektrolytkörper eine Ionen-Austauschmembran umfasst, vorzugsweise eine Kationen-Austauschmembran, besser eine Kationen-Austauschmembran, die Sulfonsäuregruppen enthält, am besten eine Protonen-Austauschmembran.

3. Elektrolytmembran nach Anspruch 1 oder 2, wobei der Polymer-Elektrolyt-Körper eine Perfluorsulfonsäuremembran ist.

4. Elektrolytmembran nach einem der Ansprüche 1 bis 3, wobei das Metall des Metalloxid-Dünnfilms Aluminium, Titan, Kupfer oder Silber, vorzugsweise Aluminium oder Titan, am besten Aluminium umfasst.

5. Elektrolytmembran nach einem Ansprüche 1 bis 4, wobei die Dicke des Metalloxid-Dünnfilms von 1 bis 1000 nm, vorzugsweise von 5 bis 500 nm, am besten von 10 bis 200 nm beträgt.

6. Elektrolytmembran nach einem Ansprüche 1 bis 5, wobei der Metalloxid-Dünnfilm in der Lage ist, eine konforme Beschichtung auf dem Polymer-Elektrolytkörper zu bilden.

7. Verfahren zum Herstellen einer Elektrolytmembran, die einen Polymer-Elektrolytkörper und mindestens eine Metalloxid-Dünnfilmschicht auf einer Fläche des Polymer-Elektrolytkörpers umfasst, wobei das Verfahren die folgenden Schritte umfasst:
(i) Bereitstellen eines Polymer-Elektrolytkörpers, und
(ii) Abscheiden von mindestens einer Metalloxid-Dünnfilmschicht auf mindestens einer Fläche des Polymer-Elektrolytkörpers, wobei die Metalloxid-Dünnfilmschicht unter Verwendung des Verfahrens der Atomschichtabscheidung (ALD) abgeschieden wird,
wobei die Metalloxid-Dünnfilmschicht ferner zusätzlich zu dieser primären Metalloxid-Dünnfilmschicht mindestens eine sekundäre Metalloxid-Dünnfilmschicht umfasst, die aus Kupfer oder Silber ausgewählt wird, vorausgesetzt, dass das Metall sich von dem Metall in der ersten Metalloxid-Dünnfilmschicht unterscheidet.

8. Verfahren nach Anspruch 7, wobei der Vorläufer für das Material des Metalloxid-Dünnfilms eine metallorganische Verbindung ist, vorzugsweise Metallalkylverbindung, besser Aluminiumalkylverbindung, am besten Trimethylaluminium; oder eine Metallchloridverbindung, die eine Flüchtigkeit hat, die sich zum Verarbeiten bei einer Temperatur von 200 °C oder darunter eignet, vorzugsweise TiCl₄.

9. Verwendung der Elektrolytmembran nach einem der Ansprüche 1 bis 6 in einer elektrochemischen Zelle zum Reduzieren des Übergangs durch die Elektrolytmembran.

10. Mikrobielle Brennstoffzelle (MFC), wobei die Brennstoffzelle umfasst:
(i) eine Anode
(ii) eine Katode
(iii) Kohlenwasserstoff enthaltenden flüssigen Brennstoff als Anolyt im Anoden-Kompartiment
(iv) Katolyt im Katoden-Kompartiment, und
(v) die Elektrolytmembran nach einem der Ansprüche 1 bis 6.

11. Direkte Methanol-Brennstoffzelle (DMFC), wobei die Brennstoffzelle umfasst
(i) eine Anode
(ii) eine Katode
(iii) Methanol als Anolyt im Anoden-Kompartiment
(iv) Katolyt im Katoden-Kompartiment, und
(v) die Elektrolytmembran nach einem der Ansprüche 1 bis 6.

12. Protonen-Austauschmembran-Brennstoffzelle (PEMFC), wobei die Brennstoffzelle umfasst
(i) eine Anode
(ii) eine Katode
(iii) Wasserstoff enthaltenden Anolyt im Anoden-Kompartiment
(iv) Sauerstoff enthaltenden Katolyt im Katoden-Kompartiment, und
(v) die Elektrolytmembran nach einem der Ansprüche 1 bis 6.

## Revendications

1. Membrane électrolyte appropriée à une utilisation dans une cellule électrochimique, comprenant un corps d'électrolyte polymère et au moins une couche à film mince en oxyde métallique déposée par un procédé de dépôt par couches atomiques (ALD) sur au moins une surface du corps électrolyte polymère, dans lequel ladite couche à film mince en oxyde métallique est perméable aux protons, **caractérisée en ce que** la couche à film mince en oxyde métallique comprend en outre en plus de cette couche à film mince en oxyde métallique primaire, au moins une couche à film mince en oxyde métallique secondaire sélectionnée parmi le cuivre ou l'argent, à condition que le métal soit différent de la première couche à film mince en oxyde métallique.

2. Membrane électrolyte selon la revendication 1, dans laquelle le corps d'électrolyte polymère comprend une membrane d'échange d'ions, de préférence une membrane d'échange de cations, de manière encore préférée une membrane d'échange de cations incluant des groupes d'acide sulfonique, de manière la plus préférée une membrane d'échange de protons.

3. Membrane électrolyte selon la revendication 1 ou 2, dans laquelle le corps électrolyte polymère est une membrane d'acide perfluorosulfonique.

4. Membrane électrolyte selon une quelconque des revendications 1-3, dans laquelle le métal du film mince en oxyde métallique comprend de l'aluminium, du titane, du cuivre ou de l'argent, de préférence de l'aluminium ou du titane, de manière la plus préférée de l'aluminium.

5. Membrane électrolyte selon une quelconque des revendications 1-4, dans laquelle l'épaisseur du film mince à oxyde métallique est comprise entre 1 et 1000 nm, de préférence entre 5 et 500 nm, de manière la plus préférée entre 10 et 200 nm.

6. Membrane électrolyte selon une quelconque des revendications 1-5, dans laquelle le film mince en oxyde métallique est capable de forme un revêtement conforme sur le corps d'électrolyte polymère.

7. Procédé de fabrication d'une membrane électrolyte comprenant un corps d'électrolyte polymère et au moins une couche à film mince en oxyde métallique sur une surface du corps d'électrolyte polymère, dans lequel ledit procédé comprend les étapes consistant à
(i) fournir un corps d'électrolyte polymère, et
(ii) déposer sur au moins une surface dudit corps d'électrolyte polymère au moins une couche à film mince en oxyde métallique, dans lequel la couche à film mince en oxyde métallique est déposée en utilisant un procédé de dépôt par couches atomiques (ALD),
dans lequel la couche à film mince en oxyde métallique comprend en outre en plus de cette couche à film mince en oxyde métallique primaire, au moins une couche à film mince en oxyde métallique secondaire sélectionnée parmi le cuivre ou l'argent, à condition que le métal soit différent de la première couche à film mince en oxyde métallique.

8. Procédé selon la revendication 7, dans lequel le précurseur pour le métal du film mince en oxyde métallique est un composé organométallique, de préférence un composé d'alkyle de métal, de manière encore préférée un composé d'alkyle d'aluminium, de manière la plus préférée du triméthyl aluminium ; ou un composé de chlorure de métal ayant une volatilité appropriée au traitement à une température de 200°C ou inférieur, de préférence TiCl₄.

9. Utilisation de la membrane électrolyte selon une quelconque des revendications 1-6 dans une cellule électrochimique afin de réduire un passage à travers ladite membrane électrolyte.

10. Pile à combustible bactérienne (MFC), dans laquelle ladite pile à combustible comprend
(i) une anode
(ii) une cathode
(iii) un hydrocarbure contenant du combustible liquide comme anolyte dans le compartiment d'anode
(iv) un catholyte dans le compartiment de cathode, et
(v) la membrane électrolyte selon une quelconque des revendications 1-6.

11. Pile à combustible à méthanol directe (DMFC), dans laquelle ladite pile à combustible comprend
(i) une anode
(ii) une cathode
(iii) du méthanol comme anolyte dans le compartiment d'anode
(iv) un catholyte dans le compartiment de cathode, et
(v) la membrane électrolyte selon une quelconque des revendications 1-6.

12. Pile à combustible à membrane d'échange de protons (PEMFC), dans lequel ladite pile à combustible comprend
(i) un anode
(ii) une cathode
(ii) de l'hydrogène contenant un anolyte dans le compartiment d'anode
(iv) de l'oxygène contenant un catholyte dans le compartiment de cathode, et
(v) la membrane électrolyte selon une quelconque des revendications 1-6.
